# EUROPÄISCHE PATENTANMELDUNG

(11) **EP 2 796 951 A1**
(43) Veröffentlichungstag der Anmeldung: **29.10.2014**
(21) Anmeldenummer: 13164822.2
(22) Anmeldetag: 23.04.2013
(51) Int. Cl.: G05B 19/042

(54) **Steuerungssystem für eine Automatisierungsanlage und zugehöriges Entwicklungssystem**

(71) Anmelder: Siemens Aktiengesellschaft, 80333 München (DE)
(72) Erfinder: Weiss, Herbert, 92266 Ensdorf (DE)

(57) **Zusammenfassung**

Es wird ein Steuerungssystem (1) für eine Automatisierungsanlage angegeben, das einen Feldbus (2), der eine Feldbusleitung (5) und mindestens zwei damit verbundene Feldbusgeräte (4a-4e) umfasst, sowie eine Gruppe (3) von modularen Befehls-/Meldegeräten aufweist, wobei die Gruppe (3) eine an den Feldbus (2) angeschlossene Kommunikationseinheit (9) und mindestens ein mit der Kommunikationseinheit (9) über einen Systembus (11) verbundenes Befehls-/Meldegerät (10a-10c) umfasst. Das Steuerungssystem (1) umfasst des Weiteren ein Entwicklungssystem (6) zur Konfigurierung des Feldbusses (2). Die Kommunikationseinheit (9) und das oder jedes Befehls-/Meldegerät (10a-10c) der Gruppe (3) sind dabei in dem Entwicklungssystem (6) unmittelbar darstellbar sowie konfigurierbar und parametrierbar.

## Beschreibung

Die Erfindung bezieht sich auf ein Steuerungssystem für eine Automatisierungsanlage sowie auf ein zugehöriges Entwicklungssystem.

Als Automatisierungsanlage wird allgemein eine ganz oder teilweise automatisierte industrielle Anlage zur Fertigung von Produkten oder Steuerung von Prozessen bezeichnet, beispielsweise eine Fertigungsstraße, ein Kraftwerk, ein Walzwerk oder eine Kläranlage.

Als Steuerungssystem wird dabei die Gesamtheit der Hardware- und Softwarekomponenten bezeichnet, die zur Steuerung der Automatisierungsanlage erforderlich sind. Ein solches Steuersystem umfasst typischerweise einen oder mehrere Steuergeräte (z.B. Personal-Computer, Mikrocontroller, Speicherprogrammierte Steuerungen, etc.), Aktoren und Sensoren, Befehls-/Meldegeräte und sonstige Eingabe-/Ausgabemittel, aber auch die zur Signalübertragung zwischen den vorstehend genannten Komponenten erforderlichen Leitungen und sonstigen Signal-übertragungsmittel.

Als Befehls-/Meldegeräte (nachfolgend kurz als BM-Geräte bezeichnet) werden dabei wiederum Geräte bezeichnet, die zur interaktiven Signalerzeugung durch einen Benutzer dienen (über die ein Nutzer der Automatisierungsanlage also Befehle in das Steuerungssystem einspeisen kann) und/oder über die Signale der Automatisierungsanlage in für einen Benutzer wahrnehmbarer Weise angezeigt werden. Befehls-/Meldegeräte, wie sie typischerweise im Rahmen des Steuerungssystems einer Automatisierungsanlage eingesetzt werden, umfassen insbesondere Drucktaster, Schlüsselschalter, Knebelschalter, sicherheitsgerichtete Schalter (z.B. Not-Halt-Schalter oder Not-Aus-Schalter), Analogwertgeber (insbesondere Dreh- und Schieberegler), Leuchtmelder, akustische Signalmelder (Summer, Sirenen, Klingeln, etc.), und dergleichen.

Zur Signalübertragung innerhalb eines Steuerungssystems werden heute überwiegend Feldbusse eingesetzt, bei denen die Aktoren, Sensoren und Steuergeräte des Steuerungssystems über eine gemeinsame Feldbusleitung kommunikationstechnisch miteinander verbunden sind. Befehls-/Meldegeräte werden üblicherweise allerdings nicht direkt an den Feldbus angeschlossen. Vielmehr werden die BM-Geräte herkömmlicherweise jeweils in Einzelverdrahtung mit einem Busgerät verbunden und können somit aus dem Feldbus nur indirekt angesprochen werden.

Anstelle von kommunikationstechnisch passiven BM-Geräten wie einfachen Schaltern und Leuchtanzeigen werden in jüngerer Zeit vermehrt modulare BM-Geräte eingesetzt. Solche BM-Geräte sind selbständig kommunikationsfähig und können daher über einen eigenen Systembus (beispielsweise ein Flachbandkabel) zu Gruppen zusammengeschaltet werden. Innerhalb einer solchen Gruppe von modularen BM-Geräten (nachfolgend auch als BM-Gruppe bezeichnet) ist üblicherweise eine (auch als Kopfbaugruppe oder Gateway bezeichnete) Kommunikationseinheit vorgesehen, die die Verbindung zwischen den BM-Geräten der BM-Gruppe und dem übergeordneten Feldbus herstellt.

Allerdings können auch moderne modulare BM-Geräte nicht direkt aus dem übergeordneten Feldbus angesprochen werden. Vielmehr können BM-Gruppen auf Feldbusebene üblicherweise nur als "Black Box", d.h. wie ein einziges, kompaktes Gerät mit universeller Konfiguration, Diagnose, etc. dargestellt werden. Die einzelnen BM-Geräte sind somit auf Feldbusebene unsichtbar.

Der Aufbau, insbesondere die Konfiguration und Diagnose eines mit einer oder mehreren BM-Gruppen versehenen Steuerungssystems ist daher vergleichsweise aufwändig und fehleranfällig. Beispielsweise wird bei einem Fehler in einem der BM-Geräte auf Feldbusebene lediglich eine für die gesamte BM-Gruppe gemeinsame Sammel-Fehlermeldung angezeigt, so dass das fehlerbehaftete BM-Gerät und der Fehler vor Ort gesucht werden müssen.

Der Erfindung liegt die Aufgabe zugrunde, die Konfigurierung eines Steuerungssystems mit mindestens einer Gruppe von modularen BM-Geräten und einem übergeordneten Feldbus zu vereinfachen.

Bezüglich eines Steuerungssystems für eine Automatisierungsanlage wird diese Aufgabe erfindungsgemäß gelöst durch die Merkmale des Anspruchs 1. Bezüglich eines Entwicklungssystems zur Konfiguration eines Feldbusses innerhalb eines solchen Steuerungssystems wird die Aufgabe erfindungsgemäß gelöst durch die Merkmale des Anspruchs 7. Vorteilhafte und teils für sich gesehen erfinderische Ausgestaltungsformen und Weiterentwicklungen der Erfindung sind in den Unteransprüchen und der nachfolgenden Beschreibung dargelegt.

Das erfindungsgemäße Steuerungssystem umfasst einen Feldbus, der eine Feldbusleitung und mindestens zwei damit verbundenes Feldbusgeräte umfasst. Das Steuerungssystem umfasst des Weiteren eine (BM-)Gruppe von modularen Befehls-/Meldegeräten (BM-Geräten), die eine Kommunikationseinheit sowie mindestens ein modulares BM-Gerät umfasst. Die Kommunikationseinheit kann hierbei selbst in das BM-Gerät oder eines von gegebenenfalls mehreren BM-Geräten integriert sein.

Die Kommunikationseinheit ist einerseits als eines der mindestens zwei Feldbusgeräte in den Feldbus geschaltet. Andererseits ist die Kommunikationseinheit über einen Systembus mit dem oder jedem BM-Gerät verbunden.

Das Steuerungssystem umfasst schließlich ein (auch als "Engineering-System" bezeichnetes) Entwicklungssystem zur Konfigurierung und Parametrierung des Feldbusses. Erfindungsgemäß ist hierbei die Kommunikationseinheit und das oder jedes BM-Gerät der BM-Gruppe in dem Entwicklungssystem unmittelbar darstellbar sowie konfigurierbar und parametrierbar.

Als "Konfigurierung des Feldbusses" wird hierbei die kommunikationstechnische Verschaltung der Feldbusgeräte auf Softwareebene verstanden. Der Begriff Konfigurierung bezeichnet also nicht die Verkabelung der Geräte mit der physikalischen Feldbusleitung, sondern die Projektierung der an den Feldbus angeschlossenen Feldbusgeräte in einer Kommunikationssteuerung (Master) des Feldbusses, insbesondere die Vergabe der Feldbusadressen, Diagnoseadressen, Eingabe-/Ausgabeadressen und Profile (z.B. als reines Eingabegerät, reines Ausgabegerät oder Ein-/Ausgabegerät) für die Feldbusgeräte.

Als "Parametrierung der Feldbusgeräte" ist die Vergabe von Werten für die von außen zugänglichen und veränderbaren Geräteparameter (beispielsweise Geräteparameter, die das Verhalten des Feldbusgeräts bei Busausfall bestimmen) des oder jedes einzelnen Feldbusgeräts bezeichnet.

Analog zur der Konfigurierung des Feldbusses wird als "Konfigurierung der BM-Gruppe" die datenübertragungstechnische Verschaltung der BM-Geräte über den gruppeninternen Systembus auf Softwareebene bezeichnet. Analog zu der Parametrierung der Feldbusgeräte wird als "Parametrierung der BM-Geräte" die Vergabe von Werten für die von außen zugänglichen und veränderbaren Geräteparameter des oder jedes einzelnen BM-Geräts bezeichnet.

Um die unmittelbare Darstellung sowie Konfigurierung und Parametrierung der BM-Geräte in dem Entwicklungssystem des übergeordneten Feldbusses auf einfach realisierbare, aber zweckmäßige Weise zu ermöglichen, ist bezüglich der modularen BM-Geräte vorzugsweise ein Objektmodell definiert, das Regeln für die (Software-)Struktur der BM-Gruppe vorgibt. Korrespondierend und kompatibel mit diesem Objektmodell sind in dem Entwicklungssystem für die Kommunikationseinheit der BM-Gruppe und das oder jedes BM-Gerät jeweils eine zugehörige Gerätebeschreibung hinterlegt, nach Maßgabe von welcher die Kommunikationseinheit und das jeweilige BM-Gerät darstellbar, konfigurierbar und parametrierbar ist.

Der Begriff "Objektmodell" bezeichnet dabei ein Regelwerk, das festlegt, welche Objekte die Kommunikationseinheit und jedes einzelne BM-Gerät auf Softwareebene aufweisen und wie diese Objekte miteinander zusammenwirken. Das Objektmodell definiert dabei insbesondere, welche (von außen sichtbare und/oder beeinflussbare) Parameter und Methoden jedes einzelne definierte Objekt aufweist, wie die Objekte zueinander in Beziehung stehen (z.B. im Sinne einer Aggregation, Vererbung oder Referenzierung). Der Begriff "Objekt" ist hierbei allgemein im Sinne eines nach außen hin abgegrenzten Bestandteils (Softwarebausteins) eine Steuerungssoftware der BM-Gruppe zu verstehen. Bei dem oder jedem "Objekt" kann es sich dabei insbesondere um ein Objekt im Sinne der objektorientierten Programmierung handeln, ebenso aber auch um eine Funktion oder Prozedur eines prozeduralen Programmierungsschemas oder eine Komponente im Sinne der komponentenorientierten Programmierung. Das Objekt gibt diese Regeln dabei vorzugsweise in abstrakter und für alle BM-Geräte einheitlicher Form vor, wobei diese Regeln dann für jedes individuelle BM-Gerät in der Gerätebeschreibung spezifiziert sind.

Die Gerätebeschreibungen beschreiben in für das Entwicklungssystem lesbarer Weise die Objekte, Parameter und Methoden, die der Kommunikationseinheit und dem oder jedem BM-Gerät in Übereinstimmung mit dem Objektmodell jeweils zugeordnet sind. Insbesondere enthält die jeweilige Gerätebeschreibung den Namen der dem jeweiligen Gerät zugeordneten Objekte, Parameter und Methoden. Darüber hinaus enthalten die Gerätebeschreibungen vorzugsweise weitere Informationen, insbesondere eine graphische Darstellung (icon) zur graphischen Darstellung des jeweiligen Geräts innerhalb einer graphischen Benutzeroberfläche des Entwicklungssystems oder einen Verweis auf eine solche Graphik, eine eindeutige Geräteidentifikationskennung (z.B. eine Maschinenlesbare Fabrikatebezeichnung MLFB oder Bestellnummer), ein oder mehrere Kommentarfelder, etc.

Das Entwicklungssystem greift hierzu vorzugsweise auf eine Liste oder Datenbank zurück, in der für jede verfügbare Kommunikationseinheit und jedes grundsätzlich einsetzbare BM-Gerät eine zugehörige Gerätebeschreibung hinterlegt ist. Diese Liste oder Datenbank enthält somit nicht nur die Gerätebeschreibungen derjenigen Kommunikationseinheit und derjenigen BM-Geräte, die tatsächlich in der BM-Gruppe vorhanden sind, sondern Gerätebeschreibungen für alle grundsätzlich einsetzbaren Kommunikationseinheiten und BM-Geräte. Die passenden Gerätebeschreibungen können hierbei mittels des Entwicklungssystems bei der Konfigurierung der BM-Gruppe ausgewählt werden.

Die Gerätebeschreibungen können grundsätzlich fest im Rahmen des Entwicklungssystems hinterlegt sein. Um die Gerätebeschreibungen jedoch einfacher aktualisieren und ergänzen zu können, sind die Gerätebeschreibungen dem Entwicklungssystem vorzugsweise als externer Dateninhalt, beispielsweise im Rahmen einer Datenbank oder einer Verzeichnisstruktur im Rahmen eines Dateisystems zur Verfügung gestellt. Insbesondere kann im Rahmen der Erfindung vorgesehen sein, dass die Geräteschreibungen zum Herunterladen aus dem Internet oder von einem mobilen Datenträger (CDrom, DVD, USB-Stick, etc.) zur Verfügung gestellt werden.

In einer besonders zweckmäßigen Ausführung des Steuerungssystems ist das Objektmodell derart definiert, dass alle Parameter und Diagnosemethoden des oder jedes BM-Geräts der BM-Gruppe in der Kommunikationseinheit gespeichert sind. Dies ermöglicht es, die BM-Geräte selbst besonders einfach zu gestalten. In bevorzugter Ausprägung der BM-Gruppe reduziert sich die in den BM-Geräten selbst implementierte Logik auf die Funktionen, die zur Kommunikation über den gruppeninternen Systembus erforderlich sind.

In zweckmäßiger Ausgestaltung ist der BM-Gruppe im Rahmen des Objektmodells ein nachfolgend als "Containerobjekt" oder "Device Rack" bezeichnetes Objekt zugeordnet, in dem die "harten" Steckplatzregeln der BM-Gruppe abgebildet sind. Als harte Steckplatzregeln werden hierbei diejenigen für die ordnungsgemäße Funktion der BM-Gruppe erforderlichen Bedingungen bezeichnet, die bereits beim Zusammenstecken (d.h. beim physikalischen Verschalten) der BM-Gruppe, und somit außerhalb des laufenden Betriebs überprüft werden können. Zu diesen harten Steckplatzregeln gehören insbesondere die Maximalanzahl der "Steckplätze", also die maximale Anzahl der über den Systembus ansprechbaren BM-Geräte und die Zulässigkeit eines hinzuzufügenden BM-Geräts. Um sicherzustellen, dass die Maximalanzahl der Steckplätze nicht überschritten wird, weist das Containerobjekt in optionaler Ausgestaltung eine definierte Anzahl von virtuellen Steckplätzen - insbesondere zur Anzeige auf einer Benutzeroberfläche des Entwicklungssystems - auf, von denen jeder mit jeweils einem BM-Gerät belegt werden kann. Zusätzlich oder alternativ definiert das Containerobjekt bestimmte zulässige Typen von BM-Geräten und lässt ausschließlich die Konfiguration eines BM-Geräts zu, das einer dieser zulässigen Typen entspricht.

Vorzugsweise umfasst das Entwicklungssystem eine grafische Nutzeroberfläche (GUI), auf der zur Konfiguration der BM-Gruppe die gewünschten BM-Geräte ausgewählt und der BM-Gruppe, insbesondere per Drag and Drop zugeordnet werden können. Zweckmäßigerweise ist das Entwicklungssystem in einem Computer, beispielsweise einem Personal Computer (PC) implementiert, der temporär oder dauerhaft als Feldbusgerät in den Feldbus geschaltet wird.

Gegenstand der Erfindung ist, wie vorstehend erwähnt, auch das zur Konfigurierung und Parametrierung eines Feldbusses vorgesehene Entwicklungssystem (Engineering-System) als solches. Erfindungsgemäß ist das Entwicklungssystem dabei derart eingerichtet, dass über das Entwicklungssystem eine BM-Gruppe der vorstehend beschriebenen Art darstellbar ist, sodass die Kommunikationseinheit und das oder jedes BM-Gerät dieser BM-Gruppe in dem Entwicklungssystem unmittelbar konfigurierbar und parametrierbar ist.

Hierzu ist dem Entwicklungssystem, wie vorstehend beschrieben, vorzugsweise für die Kommunikationseinheit sowie das oder jedes BM-Gerät der BM-Gruppe jeweils eine zugehörige Gerätebeschreibung vorgegeben, wobei den Gerätebeschreibungen ein Objektmodell für die Kommunikationseinheit sowie das oder jedes BM-Gerät zugrunde liegt.

Das Entwicklungssystem ist zweckmäßigerweise in Form eines Computerprogramms implementiert, das lauffähig auf einem Computer (insbesondere auf einem herkömmlichen Windows-PC) implementiert oder implementierbar ist.

Durch das bezüglich der BM-Gruppe definierte Objektmodell, die darauf aufbauenden Gerätebeschreibungen sowie die - insbesondere grafische - Darstellbarkeit der BM-Gruppe im Entwicklungssystem des übergeordneten Feldbusses wird insbesondere ermöglicht,
- für die Konfigurierung der BM-Gruppe die einzelnen BM-Geräte einfach aus einer Liste, insbesondere einem Hardware-Auswahlkatalog auszuwählen,
- die BM-Gruppe - grafisch, tabellarisch, etc. - durch einfaches Drag & Drop zu konfigurieren,
- die tatsächliche Konfiguration der BM-Gruppe offline und online darzustellen,
- einen Soll/Ist-Vergleich der Konfiguration der BM-Gruppe durchzuführen,
- Diagnosen an den einzelnen BM-Geräten gerätebezogen auf Feldbusebene darzustellen,
- die Größen des eingangsbezogenen Prozessabbilds (PAE) und des ausgangsbezogenen Prozessabbilds (PAA) konsistent zu halten; durch die automatische Konfigurierung der BM-Gruppe wird somit insbesondere ausgeschlossen, dass infolge einer fehlerhaften Verteilung der Adressbereiche für die einzelnen BM-Geräte Daten überschrieben werden oder auf andere Weise verloren gehen,
- die Adresslänge und -zuordnung abhängig vom Ausbau der BM-Gruppe automatisch zu berechnen,
- ein Produktbild, das dem tatsächlichen Aufbau des Steuerungssystems und der darin enthaltenen BM-Gruppe entspricht, anzuzeigen, und
- eine vollständige und korrekte Dokumentation des Steuerungssystems - insbesondere automatisch - zu erstellen und anzuzeigen.

Hierdurch wird die Projektierung eines Steuerungssystems, das eine oder mehrere modulare BM-Gruppen enthält, effizienter, schneller, weniger fehleranfällig und konsistenter. Ein wesentlicher Vorteil liegt hierbei darin, dass die Projektierung des gesamten Steuerungssystems inklusive der Projektierung der oder jeder darin enthaltenen BM-Gruppe (umfassend Konfiguration, Parametrierung, Inbetriebnahme, Diagnose und gegebenenfalls Fehlersuche) durchgängig und einheitlich in einem gemeinsamen Entwicklungssystem vorgenommen werden kann.

Ein Ausführungsbeispiel der Erfindung wird nachfolgend anhand einer Zeichnung näher erläutert. Darin zeigen:
- FIG 1: In einem schematischen Blockschaltbild ein Steuerungssystem für eine Automatisierungsanlage mit einem Feldbus, in dem ein Entwicklungssystem, eine Gruppe von modularen Befehls-Meldesystemen sowie drei weitere Feldbusgeräte angeschlossen sind,
- FIG 2: in grafischer Darstellung ein Objektmodell der Befehls-/Melde-Gruppe und
- FIG 3: in schematisch stark vereinfachter Darstellung eine grafische Benutzeroberfläche des Entwicklungssystems, in dem die Befehls-/Melde-Gruppe zur Konfigurierung und Parametrierung grafisch dargestellt ist.

Einander entsprechende Teile und Größen sind in allen Figuren stets mit gleichen Bezugszeichen versehen.

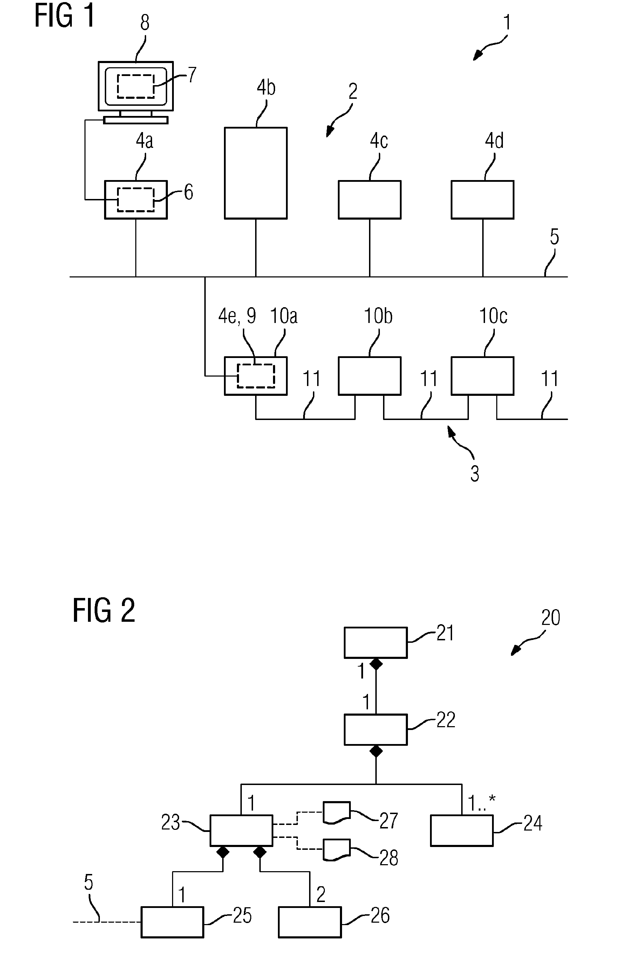

FIG 1 zeigt ein Steuerungssystem 1 für eine nicht näher dargestellte Automatisierungsanlage. Bei der Automatisierungsanlage handelt es sich beispielsweise um eine industrielle Fertigungsstraße.

Das Steuerungssystem 1 umfasst einen Feldbus 2 sowie eine daran angeschlossene Befehls-/Melde-Gruppe (nachfolgend kurz als BM-Gruppe 3 bezeichnet).

Der Feldbus 2 beruht insbesondere auf dem "Profinet IO"-Standard oder einem sonstigen - auf sogenannter "Industrial Ethernet"-Technologie beruhenden Feldbus-Standard. Grundsätzlich kann abweichend hiervon der Feldbus 2 aber auch auf einer beliebigen anderen Feldbustechnik beruhen, beispielsweise Profibus, Modbus, AS-Interface, etc.

Der Feldbus 2 umfasst mehrere Busgerät 4a,4b,4c,4d und 4e, die über eine gemeinsame Busleitung 5 datenübertragungstechnisch miteinander verschaltet sind. Abweichend von der Darstellung wird als Busleitung 5 bei dem auf dem "Profinet IO"-Standard beruhenden Feldbus 2 in der Regel ein Netz von Einzelverbindungen (z.B. mit herkömmlichen Twisted-Pair-Ethernetkabeln) eingesetzt, über die die einzelnen Feldbusgeräte 4a bis 4e mit - jeweils durch einen "Hub" oder "Switch" gebildeten - Netzknoten verschaltet sind.

Im dargestellten Beispiel handelt es sich bei dem Feldbusgerät 4a um ein Steuergerät, insbesondere einen Personal-Computer, in dem ein Entwicklungssystem 6 zur Konfigurierung und Parametrierung des Feldbusses 2 implementiert ist. Bei dem Entwicklungssystem 6 handelt es sich um ein Computerprogramm, das mit einem menschlichen Benutzer über eine grafische Benutzeroberfläche 7 interagiert. Die Benutzeroberfläche 7 wird von dem Entwicklungssystem 6 auf einem, an das Feldbusgerät 4a angeschlossenen Bildschirm 8 angezeigt. Optional ist vorgesehen, dass das Feldbusgerät 4a nur temporär zur Konfigurierung und Parametrierung an den Feldbus 2 angeschlossen wird. Des Weiteren kann das Entwicklungssystem 6 auch auf einem Computer, insbesondere PC, installiert sein, der nur mittelbar über ein separates Feldbusgerät in den Feldbus 2 geschaltet wird.

Als Feldbusgerät 4b enthält der Feldbus 2 beispielsweise eine speicherprogrammierbare Steuerung. Bei den Feldbusgeräten 4c und 4d handelt es sich um beliebige Aktoren und Sensoren, beispielsweise um einen elektrischen Antrieb und ein Messsystem zur Erhebung einer Prozessgröße.

Das Feldbusgerät 4e ist schließlich durch eine (auch als "Kopfbaugruppe" oder "Gateway" bezeichnete) Kommunikationseinheit 9 der BM-Gruppe 3 gebildet. Die Kommunikationseinheit 9 bildet einerseits die Schnittstelle zwischen dem Feldbus der BM-Gruppe und dem übergeordneten Feldbus 2. Sie bildet außerdem das einzigste Steuergerät (Master) für die Kommunikation über den Systembus der BM-Gruppe 3.

Die BM-Gruppe 3 enthält zusätzlich zu der Kommunikationseinheit 9 beispielhaft drei Befehls-/Melde-Geräte (nachfolgend kurz als BM-Geräte 10a,10b und 10c bezeichnet). Die BM-Geräte 3 sind hierbei über eine gruppeninterne Systembusleitung 11 miteinander verschaltet, die beispielsweise durch ein Flachbandkabel gebildet ist.

Bei dem BM-Gerät 10a handelt es sich insbesondere um einen sicherheitsgerichteten Schalter (auch: Not-Aus-Schalter oder Not-Halt-Schalter). Als BM-Gerät 10b umfasst die BM-Gruppe 3 beispielsweise einen (über einen Drehknopf zwischen mehreren Schaltpositionen verstellbaren) Knebelschalter. Das BM-Gerät 10c ist beispielsweise durch eine Leuchtanzeige gebildet.

Die Kommunikationseinheit 9 ist hierbei hardwaretechnisch in das BM-Gerät 10a integriert.

Auf Softwareebene wird die Struktur der BM-Gruppe durch ein Objektmodell 20 definiert, dessen grafische Repräsentation in FIG 2 dargestellt ist.

Damit die BM-Gruppe 3 durch das Entwicklungssystem 6 des Feldbusses 2 als modulares System gehandhabt werden kann, ist das zugeordnete Objektmodell 20 vorzugsweise gemäß FIG 2 in United Modeling Language(UML)-Notation formuliert.

Zuoberst dieser Struktur umfasst das Objektmodell 20 ein "Systemobjekt" 21 (auch als "BM System" bezeichnet). Diesem unmittelbar aggregiert umfasst das Objektmodell ein "Containerobjekt" 22 (auch als "BM Device Rack" bezeichnet). Diesem wiederum unmittelbar aggregiert umfasst das Objektmodell 20 ein "Kommunikationsobjekt" 23 (auch als "BM Head Device" bezeichnet) für die Kommunikationseinheit 9 sowie mindestens ein Geräteobjekt 24 (jeweils auch als "BM Device" bezeichnet) für jedes der BM-Geräte 10a, 10b bzw. 10c. Dem Kommunikationsobjekt 23 sind wiederum ein Feldbusknotenobjekt 25 (auch als "Fieldbus Node" bezeichnet) sowie genau zwei Adressobjekte 26 (auch mit "E/A Adresses" bezeichnet) aggregiert. Im Rahmen des Objektmodells 20 gibt es für jede BM-Gruppe zwingend das Systemobjekt 21, das Containerobjekt 22, das Kommunikationsobjekt 23 mit den hierzu aggregierten Objekten sowie mindestens ein Geräteobjekt. Die Anzahl der Geräteobjekte variiert daher mit der Anzahl der BM-Geräte der BM-Gruppe.

Die wichtigsten Attribute der Objekte des Objektmodells 20 sind im Anhang beschrieben. Diese Attribute sind jeweils in dem betreffenden Objekt selbst sowie in der zugehörigen Gerätebeschreibung definiert.

Das Systemobjekt 21 ist dasjenige Objekt, das aus Sicht des Feldbusses 2 als Busteilnehmer angezeigt wird. Das Systemobjekt 21 repräsentiert somit die gesamte BM-Gruppe 3 als Busteilnehmer im Feldbus 2 - die kommunikationstechnische Anbindung der BM-Gruppe 3 an den Feldbus 2 wird allerdings von dem Feldbusknotenobjekt 25 über einen entsprechenden Link zum Feldbussystem (in FIG 2 durch eine gestrichelte Line angedeutet) hergestellt.

Das Containerobjekt 22 bildet einen Container, in dem in der Gerätesicht des Entwicklungssystems 6 die Kommunikationseinheit 9 und die BM-Geräte 10a-10c aufgenommen sind. Mittels des Containerobjekts 22 werden die harten Steckplatzregeln (im Sinne der vorstehenden Definition) der BM-Gruppe 3 überprüft. So wird insbesondere durch das Containerobjekt 22 ausgeschlossen, dass der BM-Gruppe 3 mehr BM-Geräte zugewiesen werden, als adressiert werden können.

Das Kommunikationsobjekt 23 beinhaltet einen Großteil der Funktionalität der BM-Gruppe 3 auf Softwareebene. Insbesondere ist es Träger der Geräteparameter 27 sowie der Gerätediagnosen 28 aller BM-Geräte 10a-10c. Bei der BM-Gruppe 3 handelt es sich somit insoweit um ein "pseudo-modulares" System, als es zwar flexibel mit verschiedenen BM-Geräten konfiguriert und/oder erweitert werden kann, aber diese BM-Geräte (und die zugehörigen Geräteobjekte) im Unterschied zu einem echten modularen System keine eigenen Parameter aufweisen, die dann auch in eigenen Anlaufdaten resultieren würden. Stattdessen werden diese Parameter von der Kommunikationseinheit 9 - und hier insbesondere von dem zugehörigen Kommunikationsobjekt 23 - gespeichert, verwaltet und gegebenenfalls geändert. Die meisten Aktionen und Dialoge (Parametrierung, Diagnose, etc.) sind dabei über das Kommunikationsobjekt 23 erreichbar (d.h. die entsprechenden Methoden sind in dem Kommunikationsobjekt 23 implementiert).

Die Geräteobjekte 24 können neben Standarddialogen für Objektinformationen optional jeweils auch eine eigene Oberfläche für eigene Geräteparameter aufweisen. Diese Geräteparameter sind somit über das jeweils zugehörige Geräteobjekt 24 erreichbar. Die Geräteparameter selbst sind aber - wie vorstehend erwähnt - in dem Kommunikationsobjekt 23 gespeichert. Das Objektmodell 20 ermöglicht es, auch die BM-Gruppe 3 über das Entwicklungssystem 6 des Feldbusses 2 zu konfigurieren und zu parametrieren.

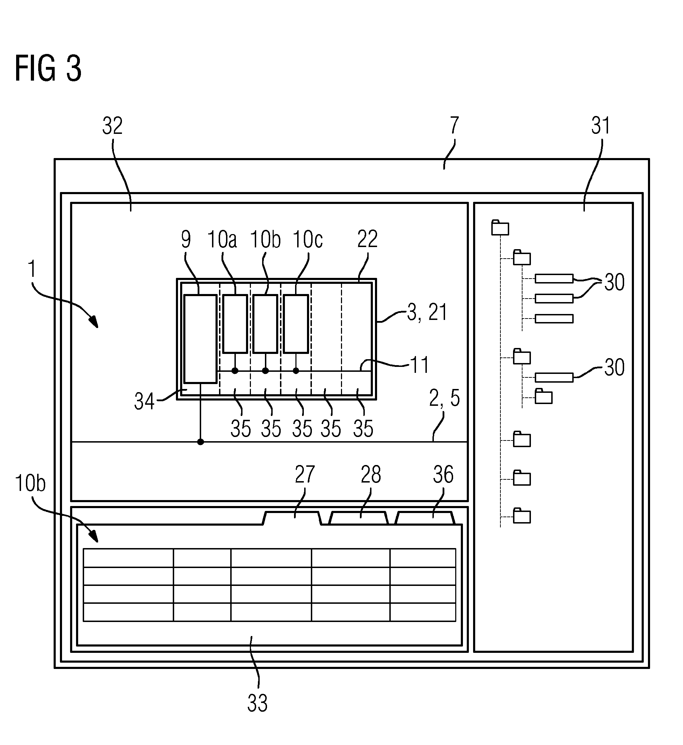

Entsprechend dem Objektmodell 20 ist dem Entwicklungssystem 6 hierzu für die Kommunikationseinheit 9 sowie für jedes BM-Gerät 10a-10c jeweils eine zugehörige Gerätebeschreibung 30 (FIG 3) verfügbar gemacht. Des Weiteren sind dem Entwicklungssystem 6 auch Gerätebeschreibungen 30 weiterer BM-Geräte verfügbar gemacht, die zusätzlich oder anstelle der BM-Geräte 10a-10c der BM-Gruppe 3 hinzugefügt werden können. Sofern zwischen mehreren verschiedenen Kommunikationseinheiten ausgewählt werden kann, hat das Entwicklungssystem 6 weiterhin auch Zugriff auf jeweils eine Gerätebeschreibung 30 für jede dieser mehreren Kommunikationseinheiten.

Jede Gerätebeschreibung 30 eines jeden BM-Geräts und einer jeden Kommunikationseinheit ist durch eine maschinenlesbare Fabrikatebezeichnung (MLFB-Code) oder eine andere Gerätekennung eindeutig gekennzeichnet.

Die Gerätebeschreibungen 30 können im Entwicklungssystem 6 fest implementiert sein. Vorzugsweise werden die Gerätebezeichnungen 30 dem Entwicklungssystem 6 aber als externer Dateninhalt zur Verfügung gestellt, beispielsweise als (offline oder online vorgehaltene) Datenbank, Konfigurationsdatei, etc. Die Gerätebeschreibungen liegen insbesondere im XML-Format vor.

Die Gerätebeschreibungen 30 bilden somit eine Art Produktkatalog, aus dem im Rahmen des Entwicklungssystems 6 von einem Benutzer auf die Benutzeroberfläche 7 BM-Geräte und die Kommunikationseinheit ausgewählt und zu der BM-Gruppe zusammengestellt werden können. Dies ist in FIG 3 beispielhaft dargestellt.

Danach umfasst die Benutzeroberfläche 7 in beispielhafter Ausführung drei Fenster, nämlich ein Geräteauswahlfenster 31, ein Konfigurationsfenster 32 und ein Eigenschaftsfenster 33.

In dem Geräteauswahlfenster 31 sind die Gerätebeschreibungen 30 der verfügbaren BM-Geräte und Kommunikationseinheiten, geordnet nach Gerätetypen, in einem Verzeichnisbaums dargestellt.

In dem Konfigurationsfenster 32 sind das konfigurierte Steuerungssystem 1 und dessen Bestandteile dargestellt. Dabei kann mittels einer grafischen Zoom-Funktion entweder das gesamte Steuerungssystem 1 inklusive des Feldbusses 2, der BM-Gruppe 3 und gegebenenfalls weiterer Komponenten dargestellt werden oder ein wählbarer Ausschnitt des Steuerungssystems 1. In dem in FIG 3 beispielhaft dargestellten Fall ist in dem Konfigurationsfenster 32 ein der BM-Gruppe 3 entsprechender Ausschnitt des Steuerungssystems 1 gezeigt. Wie aus FIG 3 hervorgeht, wird die BM-Gruppe 3 im Konfigurationsfenster 32 als virtuelles modulares Gerät dargestellt. Als grafisches Frontend des Containerobjekts 22 wird dabei ein virtueller Gerätemontagerahmen (also ein virtuelles "Device Rack") angezeigt, das genau einen virtuellen Steckplatz 34 für eine Kommunikationseinheit und mehrere - hier beispielhaft fünf - virtuelle Steckplätze 35 für jeweils ein BM-Gerät aufweist. Im dargestellten Fall sind der Steckplatz 34 mit der Kommunikationseinheit 9, und die ersten drei Steckplätze 35 mit den BM-Geräten 10-10c belegt. Die übrigen zwei Steckplätze 35 sind frei.

Zur Konfiguration der BM-Gruppe 3 werden aus dem Geräteauswahlfenster 31 eine Kommunikationseinheit und die gewünschten BM-Geräte ausgewählt und per Drag & Drop mittels einer Computermaus oder eines sonstigen Eingabegeräts in das Konfigurationsfenster 32, und dort auf einen der virtuellen Steckplätze 34,35 gezogen. Diese Aktion wird von dem Entwicklungssystem 6 nur zugelassen, wenn der Steckplatz 34,35 frei, und das ausgewählte Gerät mit dem ausgesuchten Steckplatz 34,35 kompatibel ist. Auf diese Weise wird automatisch sichergestellt, dass die BM-Gruppe 3 nur mit genau einer Kommunikationseinheit und mit einer zulässigen Anzahl von zulässigen BM-Geräten konfiguriert wird.

Bei Hinzufügung eines neuen BM-Geräts werden die zugehörigen Eingabe- und Ausgabe-Adressen für die Kommunikation innerhalb des Systembusses automatisch vergeben, so dass Adresskonflikte oder sonstige Adressierungsfehler ausgeschlossen sind.

In bevorzugter Ausführung des Entwicklungssystems 6 wird eine neue BM-Gruppe dadurch erzeugt, dass eine Kommunikationseinheit aus dem Geräteauswahlfenster 31 ausgewählt und per Drag & Drop in einen freien Bereich des Konfigurationsfensters 32 gezogen wird. Das dieser BM-Gruppe gemäß dem Objektmodell 20 zugehörige Systemobjekt 21 und das zugehörige Containerobjekt 22 sowie die entsprechenden grafischen Symbole werden in diesem Fall von dem Entwicklungssystem 6 automatisch erzeugt. Ebenso werden das dem Kommunikationsobjekt untergeordnete Feldbusknotenmodul 25 und das Adressmodul 26 automatisch erzeugt, wenn deren Gerätebeschreibung 30 der ausgewählten Kommunikationseinheit entsprechende Attribute aufweist.

In dem Eigenschaftsfenster 33 werden zu der Kommunikationseinheit 9 und jedem BM-Gerät 10a-10c der gemäß dem Konfigurationsfenster 32 konfigurierten BM-Gruppe 3 die zugehörigen Eigenschaften angezeigt, sofern die Kommunikationseinheit 9 oder das betreffende Gerät 10a-10c durch Maus-Klick in dem Konfigurationsfenster 32 oder auf sonstige Weise aktiviert wird. Im dargestellten Fall ist beispielhaft das BM-Gerät 10b aktiviert.

Die im Eigenschaftsfenster 33 darstellbaren Eigenschaften umfassen die Geräteparameter 27, Gerätediagnosen 28 sowie sonstige Information 36 des jeweils aktivierten Geräts. Durch Nutzereingaben im Eigenschaftsfenster 33 können nun zur Parametrierung der BM-Gruppe 3 Geräteparameter 27 geändert und/oder Gerätediagnosen 28 gelesen und ausgeführt werden. Die Erfindung wird an dem vorstehend beschriebenen Ausführungsbeispiel besonders deutlich, ist auf dieses gleichwohl aber nicht beschränkt. Vielmehr können weitere Ausführungsbeispiele der Erfindung von dem Fachmann aus den Ansprüchen und der vorstehenden Beschreibung abgeleitet werden.

### Anhang: Beschreibung der wichtigsten Attribute der Objekte des Objektmodells 20

### Allgemeine Attribute aller Objekte

### VARIABLE Comment;

//Gerätespezifischer Kommentar, z.B. "Halle 3, Schaltschrank 5, Tafel 2"

### VARIABLE Name;

//Gerätespezifischer Name, z.B. "Cabinet23.Tableu07" VARIABLE Mlfb;

//Bestellnummer, z.B. "XX234-0AA1-0BBX"

### VARIABLE ObjectType;

//Typ des Objekts
VARIABLE ObjectId;
//Eindeutige Identifikationsnummer des Objekts

### BM-System

### VARIABLE ObjectType;

//Typ des Objekts = BM_SYSTEM (eindeutige Objekttypnummer, Konstante)

### VARIABLE ObjectId;

// Identifikationsnummer des Objekts, z.B. SIRIUS_XX (eindeutige Objektnummer, Konstante)

### VARIABLE ContainerSize: 1;

//ein BM-System enthält immer ein 1 Rack

### VARIABLE TypeName;

//zur Anzeige im Engineering-Tool, z.B. "Befehls/Melde-System

### SIRIUS XX"

### IO-Link-DeviceRack

### VARIABLE ObjectType;

//Typ des Objekts = BM_DEVICE_RACK (eindeutige Objekttypnummer, Konstante)
VARIABLE ObjectId;
// Identifikationsnummer des Objekts, z.B. XX_SYSTEM_BUS
(eindeutige Objektnummer, Konstante)
VARIABLE ContainerSize: 16;
//Anzahl der verfügbaren Steckplätze im Rack, z.B. 16

### BM-HeadDevice

### VARIABLE ObjectType;

//Typ des Objekts = BM_HEAD_DEVICE (eindeutige Objekttypnummer, Konstante)

### VARIABLE ObjectId;

// Identifikationsnummer des Objekts, z.B. XX _ASI (eindeutige Objektnummer, Konstante)

### VARIABLE PositionNumber;

//Die aktuelle Slotnummer der Kopfbaugruppe; 0 bei Gateway VARIABLE UICapabilities: 0;

//0 = das Modul ist virtuell und wird im Engineering-Tool nicht angezeigt

### VARIABLE InAddressRange;

### VARIABLE OutAddressRange;

//Größe der Ein- und Ausgangsadressen des Slaves im Adressraum der SPS/des IO-Link Mastersystems

//z.B. beim Kompaktabzweig: 8 = 8 Byte, 16 = 16 Byte

### VARIABLE PARAMETER_12;

//Ein Geräteparameter der Kopfbaugruppe, analog Spezifikation der IODD

### VARIABLE DIAGNOSIS_19;

//Eine Gerätediagnose der Kopfbaugruppe, analog Spezifikation der IODD

### BM-Device

### VARIABLE ObjectType;

//Typ des Objekts = BM_DEVICE (eindeutige Objekttypnummer, Konstante)

### VARIABLE ObjectId;

// Identifikationsnummer des Objekts, z.B.
XX_EMERGENCY_STOP_1E1A // (eindeutige Objektnummer, Konstante)

### VARIABLE PositionNumber:

//Die aktuelle Position des Geräts, beispielsweise von 1 bis 16

### VARIABLE TypeCode;

//u.a. für die Parametrierung. Z.B. Bit 15 == 1 (Gerät nicht parametrierbar)
//Bit 15 == 0 (Gerät ist parametrierbar)

### VARIABLE FWMainVersion: 1;

### VARIABLE FWVersion: "V1.0";

//FW-Version

### VARIABLE UICapabilities: 1;

//1 = das Modul wird im Engineering-Tool angezeigt VARIABLE InAddressRange;

### VARIABLE OutAddressRange;

//Größe der Ein- und Ausgangsadressen im Adressraum des BM-Systems
//z.B. beim 2 = 2 Bit, 16 = 16 Bit

### VARIABLE PARAMETER_17;

//Ein Geräteparameter des BM-Devices, analog Spezifikation der IODD

### VARIABLE DIAGNOSIS_27;

//Eine Gerätediagnose des BM-Devices, analog Spezifikation der IODD

## Patentansprüche

1. Steuerungssystem (1) für eine Automatisierungsanlage
- mit einem Feldbus (2), der eine Feldbusleitung (5) und mindestens zwei damit verbundene Feldbusgeräte (4a-4e) umfasst,
- mit einer Gruppe (3) von modularen Befehls-/Meldegeräten, wobei die Gruppe (3) eine an den Feldbus (2) angeschlossene Kommunikationseinheit (9) und mindestens ein mit der Kommunikationseinheit (9) über einen Systembus (11) verbundenes Befehls-/Meldegerät (10a-10c) umfasst, sowie
- mit einem Entwicklungssystem (6) zur Konfigurierung des Feldbusses (2), wobei die Kommunikationseinheit (9) und das oder jedes Befehls-/Meldegerät (10a-10c) der Gruppe (3) in dem Entwicklungssystem (6) unmittelbar darstellbar sowie konfigurierbar und parametrierbar ist.

2. Steuerungssystem (1) nach Anspruch 1,
- wobei die Struktur der Gruppe (3) auf Softwareebene gemäß einem vorgegebenen Objektmodell (20) definiert ist, und
- wobei in dem Entwicklungssystem (6) für die Kommunikationseinheit (9) und das oder jedes Befehls-/Meldegerät (10a-10c) eine mit dem Objektmodell (20) kompatible Gerätebeschreibung (30) hinterlegt ist, nach Maßgabe welcher die Kommunikationseinheit (9) und das jeweilige Befehls-/Meldegerät (10a-10c) darstellbar sowie konfigurierbar und parametrierbar ist.

3. Steuerungssystem (1) nach Anspruch 1 oder 2,
wobei alle Parameter (27) und Diagnosemethoden (28) des oder jedes Befehls-/Meldegeräts (10a-10c) der Gruppe (3) gemäß dem Objektmodell (20) in der Kommunikationseinheit (9) gespeichert sind.

4. Steuerungssystem (1) nach einem der Ansprüche 1 bis 3, wobei der Gruppe (3) gemäß dem Objektmodell (20) ein Containerobjekt (22) mit einer definierten Anzahl von virtuellen Steckplätzen (34,35) zugeordnet ist, wobei jedes Befehls-/Meldegerät (10a-10c) einem virtuellen Steckplatz (35) zugeordnet ist.

5. Steuerungssystem (1) nach einem der Ansprüche 1 bis 4, wobei das Entwicklungssystem (6) eine graphische Nutzeroberfläche (7) aufweist, auf der Befehls-/Meldegeräte (10a-10c) ausgewählt und der Gruppe (3) zugeordnet werden können.

6. Steuerungssystem (1) nach einem der Ansprüche 1 bis 5, wobei das Entwicklungssystem (6) in einem der Feldbusgeräte (4a-4e) implementiert ist.

7. Entwicklungssystem (6) zur Konfigurierung und Parametrierung eines Feldbusses (2) innerhalb eines Steuerungssystems (1) nach einem der Ansprüche 1 bis 6, wobei das Entwicklungssystem (6) derart eingerichtet ist, dass über das Entwicklungssystem (6) eine Gruppe (3) von modularen Befehls-/Meldegeräten, die eine an den Feldbus (2) angeschlossene Kommunikationseinheit (9) und mindestens ein mit der Kommunikationseinheit (9) über einen Systembus (11) verbundenes Befehls-/Meldegerät (10a-10c) umfasst, darstellbar ist, sodass die Kommunikationseinheit (9) und das oder jedes Befehls-/Meldegerät (10a-10c) der Gruppe (3) in dem Entwicklungssystem (6) unmittelbar konfigurierbar und parametrierbar ist.

8. Entwicklungssystem (6) nach Anspruch 7,
dem für die oder jede Kommunikationseinheit (9) sowie für das oder jedes Befehls-/Meldegerät (10a-10c) jeweils eine zugehörige Gerätebeschreibung (30) vorgegeben ist, wobei den Gerätebeschreibungen (30) ein Objektmodell (20) für die Kommunikationseinheit (9) sowie das oder jedes Befehls-/Meldegerät (10a-10c) zugrundeliegt.
